# EUROPÄISCHE PATENTSCHRIFT

(11) **EP 3 272 475 B1**
(45) Veröffentlichungstag und Bekanntmachung des Hinweises auf die Patenterteilung: **29.09.2021**
(21) Anmeldenummer: 17161247.6
(22) Anmeldetag: 16.03.2017
(51) Int. Cl.: B25J 15/06, B66C 1/02

(54) **FLÄCHENSAUGGREIFER**
LARGE-SCALE SUCTION GRABBER
VENTOUSE GRANDE SURFACE

(30) Priorität: 19.07.2016 DE 102016113241
(43) Veröffentlichungstag der Anmeldung: 24.01.2018
(73) Patentinhaber: J. Schmalz GmbH, 72293 Glatten (DE)
(72) Erfinder: Harter, Leonhard, 72290 Loßburg (DE); Baldenhofer, Anne, 72290 Loßburg (DE)
(74) Vertreter: DREISS Patentanwälte PartG mbB

(56) Entgegenhaltungen:
- DE-A1-102004 016 637
- DE-B3- 10 316 125
- DE-C2- 3 636 523
- JP-A- 2001 322 792
- US-A1- 2013 127 194

## Beschreibung

Die Erfindung betrifft einen Flächensauggreifer nach dem Oberbegriff des Anspruchs 1. Solche gattungsgemäße Vorrichtungen sind in den Dokumenten US 2013/0127194 A1 und DE 10 2004 016 637 A1 gezeigt, bei welchen ein Ansaugteil durch eine lösbare Verbindung mit dem Grundteil verbindbar ist.

Derartige Flächensauggreifer werden in der industriellen Fertigung in verschiedensten Ausführungsformen für verschiedenste Anwendungen eingesetzt, um Gegenstände, wie bspw. zu bearbeitende Werkstücke anzusaugen und handzuhaben. Dabei ist es unter anderem aus der holzverarbeitenden Industrie bekannt, die zu bearbeitenden Gegenstände oder Werkstücke mittels der Flächensauggreifer handzuhaben.

In der holzverarbeitenden Industrie fallen aufgrund der Verarbeitung des Holzes unter anderem Schleifstaub, Späne und Harzrückstände an, welche allesamt zu Verschmutzungen der Flächensauggreifer führen können. Insbesondere bei der Verarbeitung von schmutzigen oder feuchten Ausgangsprodukten, wie bspw. von frischem Schnittholz, hat es sich gezeigt, dass die Funktionsbauteile der Flächensauggreifer, d.h. bspw. in Saugöffnungen angeordnete Strömungsventile, leicht verschmutzen können. Die bekannten Flächensauggreifer lassen jedoch nur eine vergleichsweise umständliche Reinigung der Strömungsventile zu, bei der oftmals der gesamte Flächensauggreifer demontiert werden muss.

Ferner ist es aufgrund der wachsenden Variantenvielfalt der handzuhabenden Gegenstände oder um einen am Ansaugteil angeordneten flexiblen Belag bzw. Schaum bei feuchten Werkstücken zu trocken, oftmals wünschenswert, die Flächensauggreifer baulich an die jeweiligen Varianten anzupassen, d.h. ggf. durch Anpassung eines Lochmusters der Saugöffnungen oder durch Wahl verschiedener Strömungsventile. Mit den bekannten Flächensauggreifern ist eine solche Anpassung jedoch ebenfalls nur vergleichsweise umständlich möglich und hat meist ferner zur Folge, dass der gesamte Flächensauggreifer demontiert werden muss.

Der Erfindung liegt daher die Aufgabe zugrunde, einen Flächensauggreifer bereitzustellen, bei dem einerseits die Wartungsfreundlichkeit und andererseits die Anwendungsflexibilität erhöht sind.

Diese Aufgabe wird durch einen Flächensauggreifer mit den Merkmalen des Anspruchs 1 gelöst.

Dies ist besonders vorteilhaft, da eine Reinigung des Flächensauggreifers bzw. eine Anpassung an einen anderen Anwendungsfall, d.h. an einen anderen handzuhabenden Gegenstand, erleichtert werden kann, weil der Flächensauggreifer bei der Wartung/Reinigung und/oder beim Umbau nicht vollständig demontiert werden muss. Vielmehr hat es sich als vorteilhaft erwiesen, wenn lediglich das dem handzuhabenden Gegenstand zugewandte Ansaugteil demontiert werden kann und das Greifergrundteil bspw. an einer Automatisierungsanlage verbleibt.

Vorteilhafterweise weist das Ansaugteil an seiner dem Gegenstand zugewandten Saugseite wenigstens eine, vorzugsweise eine Mehrzahl von Saugöffnungen auf. Diese Saugöffnungen können in einem Lochmuster oder Saugöffnungsmuster angeordnet sein.

Als besonders vorteilhaft hat es sich dabei erwiesen, wenn das Ansaugteil zunächst mittels der Schnellwechseleinrichtung in einer Vormontageposition einseitig mit dem Greifergrundteil verbunden werden kann, da dies einem Arbeiter die Montage, insbesondere bei Überkopfarbeiten, erleichtert.

Weiterhin ist es möglich, dass ein Unterdruckerzeuger am Flächensauggreifer vorgesehen ist. Der Unterdruckerzeuger kann an einer Außenseite des Flächensauggreifers angeordnet sein. Darüber hinaus ist es möglich, dass der Unterdruckerzeuger als Einschubteil ausgebildet ist und zumindest abschnittsweise in das Greifergrundteil einschiebbar ist. Ferner ist denkbar, dass ein weiterer Einschub vorgesehen ist, der in den ersten Unterdruckkammer verlagerbar angeordnet ist und zur Beeinflussung eines aktiven Volumens der ersten Unterdruckkammer ausgelegt ist.

Weiterhin ist es vorteilhaft, wenn der Flächensauggreifer modular ausgebildet ist. Dabei ist es denkbar, dass jeweils mehrere Flächensauggreifer an ihren kurzen und/oder langen Schmalseiten miteinander verbunden werden können. Ferner ist es denkbar, dass der Flächensauggreifer eine Kühleinrichtung aufweist, die zur Kühlung des Flächensauggreifers ausgelegt ist und/oder dass der Flächensauggreifer eine Heizeinrichtung aufweist, die zur Beheizung des Flächensauggreifers ausgelegt ist.

Um eine Verbindung des Ansaugteils mit dem Greifergrundteil zur Erreichung der Vormontageposition zu erleichtern, ist vorgesehen, dass die Schnellwechseleinrichtung eine Einhängvorrichtung umfasst die derart ausgebildet ist, dass das Ansaugteil klappbar in das Greifergrundteil einseitig einhängbar ist. Die Einhängvorrichtung umfasst vorteilhafterweise eine am Greifergrundteil angeordnete Ausnehmung und einen am Ansaugteil angeordneten, mit der Ausnehmung des Greifergrundteils zumindest teilweise korrespondierenden Vorsprung. Dabei ist es möglich, dass die Ausnehmung und der Vorsprung derart miteinander korrespondieren, dass in der Vormontageposition des Ansaugteils am Greifergrundteil von der Ausnehmung und vom Vorsprung eine Art Scharnier gebildet wird, das ein Klappen des Ansaugteils in die Endmontageposition ermöglicht. Weiterhin ist es denkbar, dass die Ausnehmung am Ansaugteil vorgesehen ist, wobei der Vorsprung am Greifergrundteil angeordnet ist. Vorteilhafterweise ist die Einhängvorrichtung an einer der langen Schmalseiten des Flächensauggreifers angeordnet. Es ist jedoch auch denkbar, die Einhängvorrichtung an einer der kurzen Schmalseiten des Flächensauggreifers oder an der dem Gegenstand zugewandten Saugseite des Ansaugteils anzuordnen.

In einer weiteren vorteilhaften Ausgestaltung des Flächensauggreifers ist vorgesehen, dass die Schnellwechseleinrichtung wenigstens eine Fixiereinrichtung umfasst, die auf der der Einhängvorrichtung abgewandten Seite des Flächensauggreifers vorgesehen ist und derart ausgelegt ist, dass das Ansaugteil am Greifergrundteil in der Endmontageposition fixierbar ist. Wenn die Einhängvorrichtung an einer der langen Schmalseiten angeordnet ist, kann die Fixiereinrichtung vorteilhafterweise an der der Einhängvorrichtung abgewandten anderen langen Schmalseite angeordnet werden. Wenn die Einhängvorrichtung an der dem Gegenstand zugewandten Saugseite des Ansaugteils angeordnet ist, kann die Fixiereinrichtung vorteilhafterweise an der Saugseite angebracht sein

Dabei ist es denkbar, dass die Fixiereinrichtung wenigstens einen Spannverschluss umfasst. Alternativ oder ergänzend dazu ist es denkbar, dass die Fixiereinrichtung eine Clips- oder Schnappverbindung, eine Magnetverbindung, einen Bajonettverschluss, eine Schraubverbindung oder eine Kunststoff-Spannverbindung (wie bspw. einen von Traktoren bekannten Haubenhalter) umfasst. Wenn ein Spannverschluss vorgesehen ist, ist es denkbar, dass der Spannverschluss ein Verschlussgrundteil und ein Verschlussspannteil aufweist, das zwischen einer Freigabelage und einer Spannlage verlagerbar ist.

In einer besonders vorteilhaften Weiterbildung des Flächensauggreifers kann ein Funktionsteil vorgesehen sein, in dem wenigstens ein Strömungsventil angeordnet ist. Dabei ist es möglich, dass das Strömungsventil in das Funktionsteil einclipsbar ausgebildet ist, wobei so ein einfacher Austausch des Strömungsventils ermöglicht werden kann. Vorteilhafterweise ist eine Mehrzahl von Strömungsventilen vorgesehen, die allesamt in einem Lochmuster angeordnet sind, das dem Lochmuster der Saugöffnungen des Ansaugteils entspricht. In den Strömungsventilen können als bspw. als Kugel ausgebildete Flug- oder Ventilkörper vorgesehen sein.

Um auch das Funktionsteil einfach am Greifergrundteil befestigen zu können, kann vorgesehen sein, dass die Schnellwechseleinrichtung derart ausgelegt ist, dass das Funktionsteil zur Erreichung einer Vormontageposition einseitig mit dem Greifergrundteil derart verbindbar ist, dass das Funktionsteil klappbar in eine Endmontageposition verlagerbar ist. Dabei ist es bspw. möglich, dass das Funktionsteil zunächst unabhängig vom Ansaugteil am Greifergrundteil befestigt werden kann, wobei dann das Ansaugteil entweder unmittelbar am Greifergrundteil oder mittelbar mittels des Funktionsteils am Greifergrundteil befestigt werden kann.

Alternativ oder ergänzend dazu ist es denkbar, dass das Funktionsteil am Greifergrundteil mittels einer Clipsverbindung, einer Magnetverbindung oder einer Nut-Feder-Verbindung befestigbar ist. Dabei ist es ebenfalls möglich, dass das Funktionsteil zunächst unabhängig vom Ansaugteil am Greifergrundteil befestigt werden kann. Alternativ dazu ist denkbar, dass das Funktionsteil lediglich mittels des Ansaugteils am Greifergrundteil befestigbar ist und hierzu bspw. in das Ansaugteil eingelegt werden kann.

Ferner ist es denkbar, dass wenigstens ein Deckel vorgesehen ist, der das Greifergrundteil an einer kurzen Schmalseite verschließt, wobei das Funktionsteil am Greifergrundteil mittelbar durch den Deckel befestigbar ist. Vorteilhafterweise sind zwei Deckel vorgesehen, die das Greifergrundteil an seinen kurzen Schmalseiten verschließen, wobei die Deckel mit dem Greifergrundteil verschraubt sind und auf ihrer dem Greifergrundteil zugewandten Seite wenigstens eine, vorzugsweise zwei Ausnehmungen aufweisen, die zur Aufnahme eines Schraubenkopfes ausgelegt sind, wobei die mittelbare Verbindung des Funktionsteils mit dem Greifergrundteil dann dadurch erfolgen kann, dass Schrauben vorgesehen sind, die in Nuten des Funktionsteils angeordnet sind, wobei die Schraubenköpfe dieser Schrauben wiederum durch die in den Deckeln angeordneten Ausnehmungen gegen Herausfallen gesichert sind.

Als besonders vorteilhaft hat es sich dabei erwiesen, wenn das Funktionsteil zwischen dem Greifergrundteil und dem Ansaugteil anordenbar ist oder wenn das Funktionsteil und das Ansaugteil einteilig ausgebildet sind.

In einer weiteren vorteilhaften Ausgestaltung des Flächensauggreifers ist vorgesehen, dass das wenigstens eine Strömungsventil einen Ventilkörper aufweist, wobei der Ventilkörper von einer dem Greifergrundteil zugewandten Seite und/oder von einer der Saugseite zugewandten Seite gegen Herausfallen gesichert ist.

Dabei ist es denkbar, dass eine Folie vorgesehen ist, die zur Sicherung des Ventilkörpers im Funktionsteil ausgelegt ist und/oder dass das Ansaugteil zur Sicherung des Ventilkörpers im Funktionsteil auf der der Saugseite zugewandten Seite ausgelegt ist. Vorteilhafterweise weist die Folie und/oder das Ansaugteil ein Lochmuster auf, das einer Anordnung der Strömungsventile im Funktionsteil entspricht, so dass mittels der Folie und/oder des Ansaugteils ein Herausfallen der Ventilkörper verhindert werden kann. Es ist ferner möglich, dass statt einer Folie eine Kunststoffplatte, ein Blech oder ein Magnetstreifen vorgesehen ist, wobei sämtliche dieser Bauteile zur Sicherung der Ventilkörper im Funktionsteil ausgelegt sind.

Es ist ferner denkbar, dass ein streifenförmiges Befestigungselement vorgesehen ist, das zur Sicherung des Ventilkörpers im Funktionsteil ausgelegt ist, wobei eine Nut vorgesehen ist, in welche das streifenförmige Befestigungselement derart einclipsbar ist, dass der Ventilkörper bei in die Nut eingeclipstem Befestigungselement gegen Herausfallen aus dem Funktionsteil gesichert ist.

Dabei ist es möglich, dass das streifenförmige Befestigungselement mehrlagig ausgebildet ist und eine flächige Maskenfolie und zwei flächige Dichtungselemente umfasst, wobei die flächigen Dichtungselemente auf einer Ober- und Unterseite der Maskenfolie angeordnet sind. Vorteilhafterweise weisen die Maskenfolie und die Dichtungselemente Öffnungen mit einer Anordnung auf, deren Anordnung der Anordnung bzw. dem Lochmuster der Saugöffnungen entspricht. Die Öffnungen der Dichtungselemente sind vorteilhafterweise kreisrund, wobei die Öffnungen der Maskenfolie die Form eines vorzugsweise dreiblättrigen Kleeblattes aufweisen können. Anstatt eines dreilagigen Aufbaus des streifenförmigen Befestigungselements ist auch ein Aufbau mit mehr als drei Lagen, d.h. bspw. ein vier- oder fünflagiger Aufbau des streifenförmigen Befestigungselements möglich.

In einer besonders variablen und kostengünstigen Ausgestaltung des Flächensauggreifers ist vorgesehen, dass das Greifergrundteil an seinen langen Schmalseiten jeweils wenigstens eine Nut aufweist und/oder dass das Ansaugteil an seinen langen Schmalseiten jeweils wenigstens eine Nut aufweist. Als besonders vorteilhaft hat es sich dabei erwiesen, wenn das Greifergrundteil und das Ansaugteil als Strangpressprofile ausgebildet sind, die bspw. aus Aluminium hergestellt sind. Weiterhin ist es denkbar, dass das Greifergrundteil an seiner dem Gegenstand abgewandten Oberseite ebenfalls zwei Nuten aufweist. Es ist jedoch auch möglich, dass das Greifergrundteil und das Ansaugteil als Schweiß- oder Frästeile ausgebildet sind.
Um Bauteile einfach am Flächensauggreifer befestigen zu können kann die wenigstens eine Nut derart ausgebildet sein, dass ein Nutenstein in der Nut verliersicher anordenbar ist. Dabei ist es denkbar, dass die Nut als T-Nut ausgebildet ist, wobei der jeweilige Nutenstein dann als T-Nutenstein ausgebildet ist. Mittels eines derartigen Nutensteins ist es möglich, dass der Spannverschluss bzw. das Verschlussgrundteil am Greifergrundteil bzw. am Ansaugteil durch Verbinden des Verschlussgrundteils mit dem Nutenstein befestigbar ist. Vorteilhafterweise ist das Verschlussspannteil derart ausgebildet, dass es bei Befestigung des Verschlussgrundteils am Greifergrundteil in die Nut des Ansaugteils eingreift. Es ist jedoch auch denkbar, das Verschlussgrundteil am Ansaugteil anzuordnen, wobei das Verschlussspannteil in der Spannlage dann in eine Nut am Greifergrundteil eingreift. Darüber hinaus ist es möglich, dass statt der Nut Haken vorgesehen sind, die mit dem Greifergrundteil verschraubt, vernietet oder verschweißt sind.

Gemäß einer weiteren vorteilhaften Ausgestaltung des Flächensauggreifers ist es denkbar, dass ein flexibler Belag vorgesehen ist, der am Ansaugteil an seiner dem Gegenstand zugewandten Saugseite angeordnet ist. Dabei ist es besonders vorteilhaft, wenn der flexible Belag, bspw. ein Schaum, ein Lochmuster aufweist, das einem Lochmuster der Saugöffnungen des Ansaugteils entspricht. Der flexible Belag kann bspw. auf die Saugseite aufgeklebt sein. Alternativ dazu ist es jedoch auch möglich, dass statt des flexiblen Belags eine Mehrzahl von Faltenbalgsaugern vorgesehen ist, wobei jeder Saugöffnung ein Faltenbalgsauger zugeordnet ist.

Weiterhin ist es möglich, dass das Ansaugteil eine zweite Unterdruckkammer aufweist, wobei ein in einem Steuerzylinder geführter und zwischen einer Verschlusslage und einer Verbindungslage verfahrbarer Steuerkolben vorgesehen ist, wobei der Steuerkolben in der Verschlusslage die erste und die zweite Unterdruckkammer fluidisch trennt und in der Verbindungslage fluidisch verbindet. Dabei ist es denkbar, dass die erste Unterdruckkammer als Unterdruckspeicher ausgebildet ist, wobei ein Unterdruck in der zweiten Unterdruckkammer mittels des Steuerkolbens schnell einstellbar ist. Es ist jedoch auch denkbar, dass kein Unterdruckspeicher vorgesehen ist und lediglich im Greifergrundteil eine Unterdruckkammer vorgesehen ist, wobei das Ansaugteil lediglich zum Verschließen der Unterdruckkammer ausgebildet ist.

Die Erfindung wird im Folgenden anhand der Figuren näher beschrieben.

Es zeigen:
- Figur 1: eine perspektivische Ansicht einer ersten Ausführungsform eines erfindungsgemäßen Flächensauggreifers;
- Figur 2: eine Seitenansicht des Flächensauggreifers gemäß Figur 2;
- Figur 3: den Flächensauggreifer gemäß der Figuren 1 und 2 in einer perspektivischen Ansicht mit vom Greifergrundteil gelösten Ansaugteil;
- Figur 4: einen Schnitt durch eine zweite Ausführungsform eines erfindungsgemäßen Flächensauggreifers;
- Figur 5: eine schematische Darstellung einer ersten Variante eines erfindungsgemäßen Flächensauggreifers; und
- Figur 6: eine schematische Darstellung einer zweiten Variante eines erfindungsgemäßen Flächensauggreifers;
- Figur 7: eine schematische Darstellung einer dritten Variante eines erfindungsgemäßen Flächensauggreifers;
- Figur 8: eine Detaillösung der Variante gemäß Figur 6 gemäß der Ausführungsform von Figur 4;
- Figur 9: eine Detaillösung gemäß der Ausführungsform von Figur 4; und
- Figur 10: ein streifenförmiges Befestigungselement mit flächigen Dichtungselementen der Ausführungsform gemäß Figur 9 in einer Explosionsdarstellung.

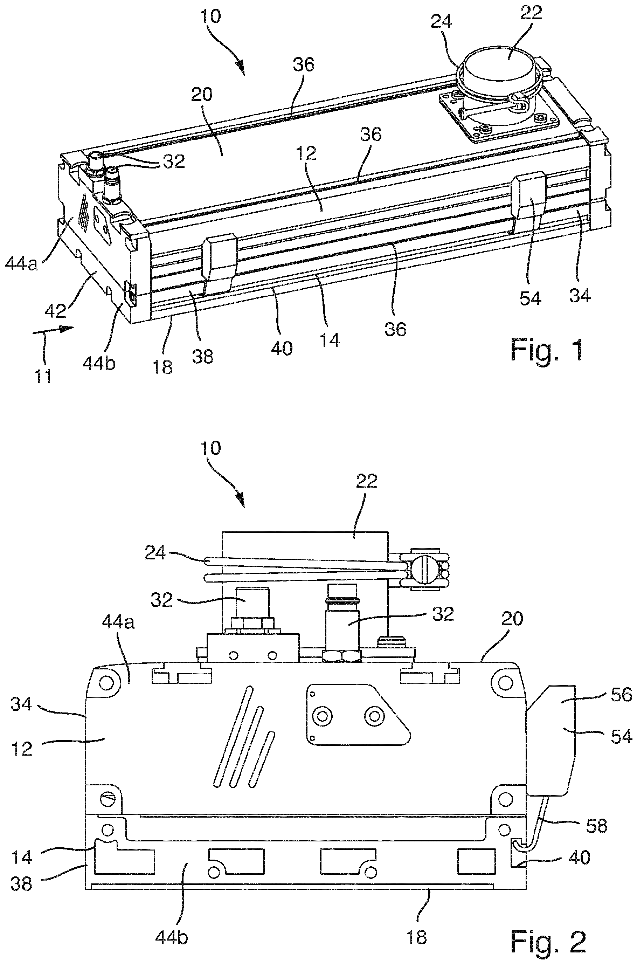

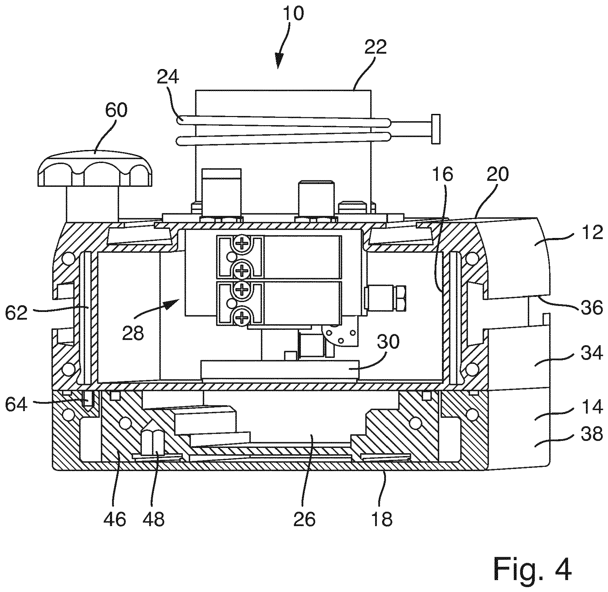

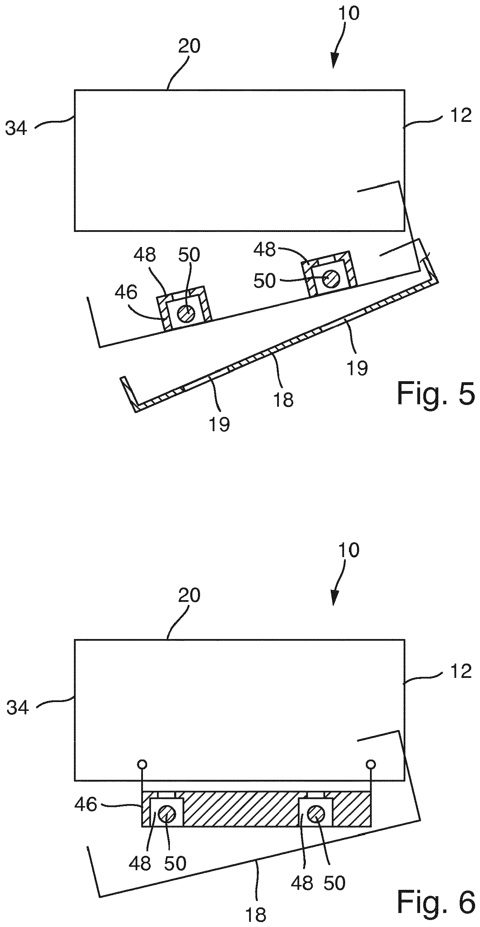

In den Figuren 1 bis 3 ist eine erste Ausführungsform eines erfindungsgemäßen Flächensauggreifers 10 gezeigt, wobei Figur 2 den Flächensauggreifer 10 bei Blick in Richtung des Pfeils 11 in Figur 1 zeigt. Figur 4 zeigt eine zweite Ausführungsform eines erfindungsgemäßen Flächensauggreifers 10 im Schnitt. In den Figuren 5 bis 7 sind schematische Darstellungen verschiedener Varianten des erfindungsgemäßen Flächensauggreifers gezeigt.

Der in den Figuren 1 bis 4 gezeigte Flächensauggreifer 10 zum Ansaugen und Handhaben eines in den Figuren nicht gezeigten Gegenstands weist ein Greifergrundteil 12 und ein dem Gegenstand zugewandtes Ansaugteil 14 auf, das mit dem Greifergrundteil 12 verbindbar ist.

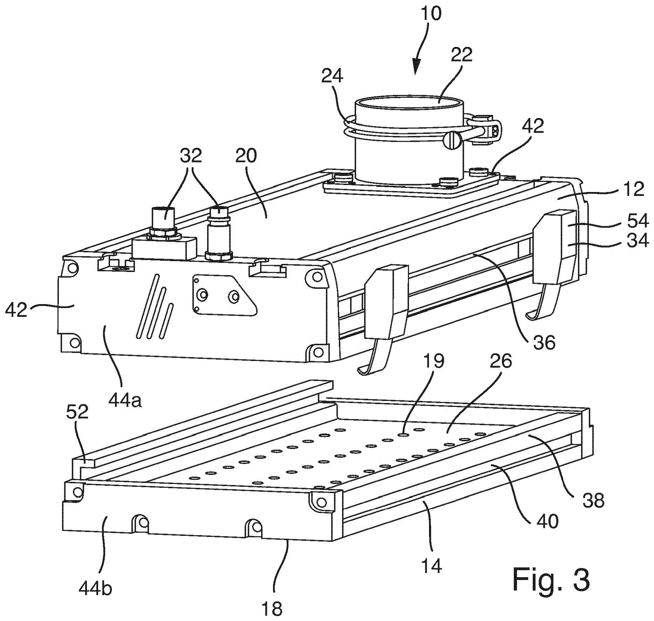

Das Greifergrundteil 12 und das Ansaugteil 14 sind jeweils als aus Aluminium hergestellte Strangpressprofile ausgebildet. Das Greifergrundteil 12 weist eine mittels einer nicht gezeigten Unterdruckversorgung evakuierbare erste Unterdruckkammer 16 auf, wobei das Ansaugteil 14 auf der dem Greifergrundteil 12 abgewandten Seite eine Saugseite 18 mit einer Mehrzahl von in einem Lochmuster angeordneten Saugöffnungen 19 (vgl. Figuren 3, 5, 7) aufweist. Der Flächensauggreifer 10 weist am Greifergrundteil 12 auf der dem Ansaugteil 14 abgewandten Oberseite 20 einen Anschlussstutzen 22 zur Verbindung mit der Unterdruckversorgung, bspw. mit einem Unterdruckerzeuger auf, wobei am Anschlussstutzen eine Schlauchklemme 24 vorgesehen ist.

Wie insbesondere in den Figuren 3 und 4 zu erkennen ist, weist das Ansaugteil 14 eine zweite Unterdruckkammer 26 auf, wobei ein in einem Steuerzylinder 28 geführter und zwischen einer Verschlusslage, in welcher die erste Unterdruckkammer 16 von der zweiten Unterdruckkammer 26 fluidisch getrennt ist, und einer Verbindungslage, in welcher die erste Unterdruckkammer 16 und die zweite Unterdruckkammer 26 fluidisch verbunden sind, verfahrbarer Steuerkolben 30 vorgesehen ist. Der Steuerkolben 30 ist mittels der der Anschlüsse 32 der Steuerventile von der Oberseite 20 des Flächensauggreifers 10 ansteuerbar. Es ist auch denkbar, die Anschlüsse 32 der Steuerventile an einer anderen Stelle des Flächensauggreifers 10 anzuordnen.

Ferner kann ein flexibler Belag vorgesehen sein, der am Ansaugteil 12 an der Saugseite 18 befestigt, bspw. auf die Saugseite verklebt ist. Der flexible Belag weist dabei ein Lochmuster auf, das dem Lochmuster der Saugöffnungen 19 entspricht. Darüber hinaus ist es denkbar, dass alternativ zu dem flexiblen Belag an der Saugseite 18 des Ansaugteils 14 eine Mehrzahl von Faltenbalgsaugern angeordnet ist, wobei jeweils jeder Saugöffnung 19 ein jeweiliger Faltenbalgsauger zugeordnet ist.

Das Greifergrundteil 12 weist an seinen langen Schmalseiten 34 und an seiner Oberseite 20 jeweils als insbesondere T-Nuten ausgebildete Nuten 36 auf, die derart ausgebildet sind, dass ein Nutenstein, insbesondere ein T-Nutenstein verliersicher in den Nuten 36 angeordnet werden kann. Ferner ist mittels der an der Oberseite 20 des Greifergrundteils 12 angeordneten Nuten 36 die Befestigung von weiteren Anbauteilen am Flächensauggreifer 10 möglich.

Das Ansaugteil 14 weist an seinen langen Schmalseiten 38 ebenfalls jeweils eine Nut 40 auf.

Da das Greifergrundteil 12 und das Ansaugteil 14 als Strangpressprofile ausgebildet sind, ist an den beiden kurzen Schmalseiten 42 des Flächensauggreifers 10 endseitig jeweils ein zweiteiliger Deckel 44 vorgesehen, wobei eine Deckeloberseite 44a dem Greifergrundteil 12 zugeordnet ist und wobei eine Deckelunterseite 44b dem Ansaugteil 14 zugeordnet ist. Es ist auch möglich, dass die Deckel 44 einteilig ausgebildet sind. Darüber hinaus ist denkbar, dass weitere Funktionsteile, wie bspw. die in Figur 1 gezeigten Anschlüsse 32 der Steuerventile, in die Deckel 44 integriert werden können. Die Deckel 44 können mit dem Greifergrundteil 12 bzw. dem Ansaugteil 14 verschraubt sein.

Der Flächensauggreifer 10 weist ein insbesondere in den Figuren 4 bis 7 deutlich erkennbares Funktionsteil 46, in dem eine Mehrzahl von Strömungsventilen 48 angeordnet ist. Die Strömungsventile 48 weisen jeweils einen in den Figuren 5 bis 7 gezeigten Ventilkörper 50 auf, wobei der Ventilkörper von einer dem Greifergrundteil 12 zugewandten Seite und/oder von einer der Saugseite 18 zugewandten Seite gegen Herausfallen gesichert ist.

Dabei ist es denkbar, dass eine Folie vorgesehen ist, die zur Sicherung der Ventilkörper 50 im Funktionsteil 46 ausgelegt ist und/oder dass das Ansaugteil 14 zur Sicherung der Ventilkörper 50 im Funktionsteil 46 auf der der Saugseite 18 zugewandten Seite ausgelegt ist. Es ist jedoch auch möglich, dass die Ventilkörper 50 im Funktionsteil 46 von einer der Saugseite 18 abgewandten Seite durch eine Folie gesichert sind. Vorteilhafterweise weist die Folie und/oder das Ansaugteil 14 dann ein Lochmuster auf, das einer Anordnung der Strömungsventile 48 im Funktionsteil entspricht, so dass mittels der Folie und/oder des Ansaugteils 14 ein Herausfallen der Ventilkörper 50 verhindert werden kann. Vorteilhafterweise entspricht die Anordnung der Ventile 48 der Anordnung der Saugöffnungen 19 im Ansaugteil 14. Die Folie kann bspw. Ausnehmungen mit kleeblattartiger Geometrie aufweisen.

Da es bspw. in der holzverarbeitenden Industrie aufgrund des bei der Holzverarbeitung anfallenden Schleifstaubs, der Späne oder Harzrückstände oftmals zu Verschmutzungen der Flächensauggreifer 10 im Bereich des Ansaugteils 14 bzw. der Strömungsventile 48 kommt und die Flächensauggreifer 10 insbesondere bei der Verarbeitung von schmutzigen oder feuchten Ausgangsprodukten, wie bspw. von frischem Schnittholz, leicht verschmutzen, ist zur einfachen Reinigung und Instandhaltung der Flächensauggreifer 10 eine Schnellwechseleinrichtung vorgesehen, die zur insbesondere fluiddichten Verbindung des Greifergrundteils 12 und des Ansaugteils 14 ausgelegt ist. Das Funktionsteils 46 ist zwischen dem Greifergrundteil 12 und dem Ansaugteil 14 angeordnet und ebenfalls fluiddicht mit diesen verbunden. Die Schnellwechseleinrichtung ist derart ausgebildet, dass das Ansaugteil 14 zur Erreichung einer in den Figuren 5 bis 7 schematisch dargestellten Vormontageposition einseitig mit dem Greifergrundteil 12 verbindbar ist. Das Ansaugteil 14 ist dabei insbesondere derart mit dem Greifergrundteil 14 verbindbar, dass das Ansaugteil 14 klappbar in eine in den Figuren 1, 2 und 4 gezeigte Endmontageposition verlagerbar ist.

Dabei umfasst die Schnellwechseleinrichtung eine Einhängvorrichtung, die derart ausgebildet ist, dass das Ansaugteil 14 klappbar in das Greifergrundteil 12 einhängbar ist. Bei den in den Figuren gezeigten Ausführungsformen umfasst die Einhängvorrichtung wenigstens eine der Nuten 36 in den langen Schmalseiten 34 des Greifergrundteils 12, wobei ein in Figur 3 deutlich erkennbarer, L-förmiger Profilabschnitt 52 vorgesehen ist, der an einer der langen Schmalseiten 38 des Ansaugteils 14 angeordnet ist und als eine Art Vorsprung in die als Ausnehmung ausgebildeten Nuten 36 oder in eine zusätzliche Nut im Greifergrundteil 12 einführbar ist, wobei der Profilabschnitt 52 und die Nut 36 oder die zusätzliche Nut derart miteinander korrespondieren, dass in der Vormontageposition des Ansaugteils 14 am Greifergrundteil 12 von der Nut 36 und vom Profilabschnitt 52 eine Art Scharnier gebildet wird, das ein Klappen des Ansaugteils 14 in die Endmontageposition ermöglicht.

Die Schnellwechseleinrichtung umfasst wenigstens eine Fixiereinrichtung, die auf der der Einhängvorrichtung abgewandten Schmalseite 34, 38 vorgesehen ist und derart ausgelegt ist, dass das Ansaugteil 14 am Greifergrundteil 12 in der Endmontageposition fixierbar ist.

In der Ausführungsform der Figuren 1 bis 3 umfasst die Fixiereinrichtung bspw. einen Spannverschluss 54. Der Spannverschluss weist ein Verschlussgrundteil 56 und ein Verschlussspannteil 58 auf, das zwischen einer Freigabelage und einer Spannlage verlagerbar ist. Der Spannverschluss 54 bzw. das Verschlussgrundteil 56 ist bspw. mittels eines in der Nut 36 angeordneten Nutensteins am Greifergrundteil 12 befestigt. Das Verschlussspannteil 58 ist derart ausgebildet, dass es bei Befestigung des Verschlussgrundteils 56 am Greifergrundteil 12 in die Nut 40 des Ansaugteils 14 eingreift. Es ist auch möglich, dass das Verschlussspannteil 58 in eine in den Figuren nicht gezeigte Nase oder einen in den Figuren nicht gezeigten Gegenhaken des Ansaugteils 14 eingreift.

In der Ausführungsform gemäß Figur 4 umfasst die Fixiereinrichtung eine mittels eines Sterngriffs 60 betätigbare Fixierschraube 62, die zur Fixierung des Ansaugteils 14 in der Endmontageposition in ein Sackloch 64 am Ansaugteil 14 einschraubbar ist.

In den schematischen Darstellungen der Figuren 5 bis 7 sind verschiedene Varianten des Flächensauggreifers 10 dargestellt, wobei das Funktionsteil 46 jeweils zwischen dem Greifergrundteil 12 und dem Ansaugteil 14 angeordnet ist.

In der Variante der Figur 5 sind das Funktionsteil 46 und das Ansaugteil 14 beide mittels einer Einhängvorrichtung am Greifergrundteil 12 befestigt. Dabei ist denkbar, dass das Funktionsteil 46 und das Ansaugteil unmittelbar am Greifergrundteil 12 befestigt sind oder dass das Funktionsteil 46 unmittelbar am Greifergrundteil 12 befestigt ist und das Ansaugteil 14 mittelbar über das Funktionsteil 46 am Greifergrundteil 12 befestigt ist.

In der Variante der Figur 6 ist das Funktionsteil 46 bspw. mittels einer Clipsverbindung, einer Magnetverbindung, oder einer Nut-Feder-Verbindung am Greifergrundteil 12 befestigt ist. Alternativ ist auch denkbar, dass das Funktionsteil 46 mit dem Greifergrundteil 12 verschraubt ist. Maßgeblich ist jedoch, dass das Funktionsteil 46 unabhängig vom Ansaugteil 14 am Greifergrundteil 12 befestigt ist.

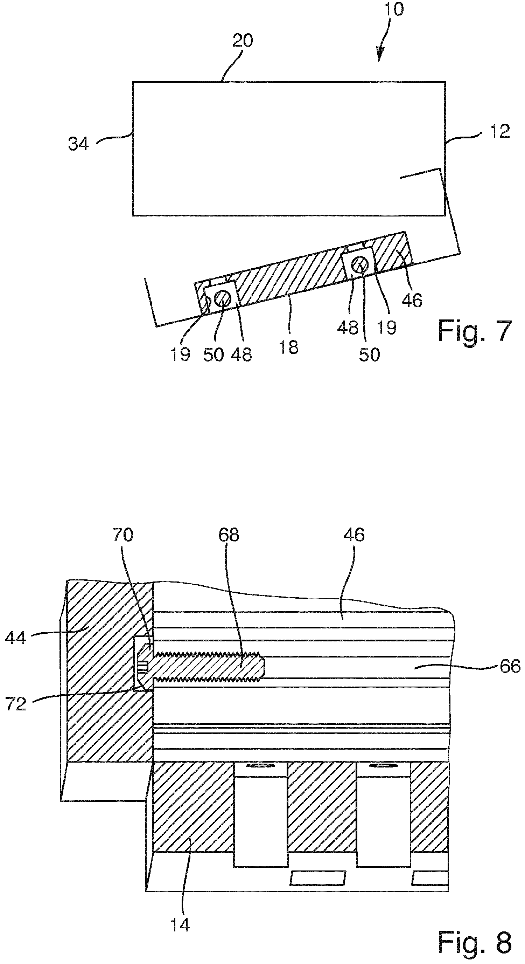

Figur 8 zeigt dabei eine Detaillösung der Variante gemäß Figur 6, wobei das Funktionsteil 46 über die Deckel 44 mittelbar mit dem Greifergrundteil 12 verbunden ist. Hierzu sind im Funktionsteil 46 Nuten 66 vorgesehen, in denen Schrauben 68 angeordnet, insbesondere eingeschraubt sind. Die Schrauben 68 weisen Schraubenköpfe 70 auf. Die Deckel 44 sind mit dem Greifergrundteil 12 verschraubt und weisen auf ihrer dem Greifergrundteil 12 zugewandten Seite Ausnehmungen auf 72, die zur Aufnahme der Schraubenköpfe 70 ausgelegt sind, wobei die mittelbare Verbindung des Funktionsteils 46 mit dem Greifergrundteil 12 dann dadurch erfolgen kann, dass die Schraubenköpfe 64 der Schrauben 68 durch die in den Deckeln 44 angeordneten Ausnehmungen 72 gegen Herausfallen gesichert sind.
In der Variante der Figur 7 ist das Funktionsteil 46 einteilig mit dem Ansaugteil 14 verbunden oder wird zumindest mittels des Ansaugteils 14 am Greifergrundteil 12 befestigt.

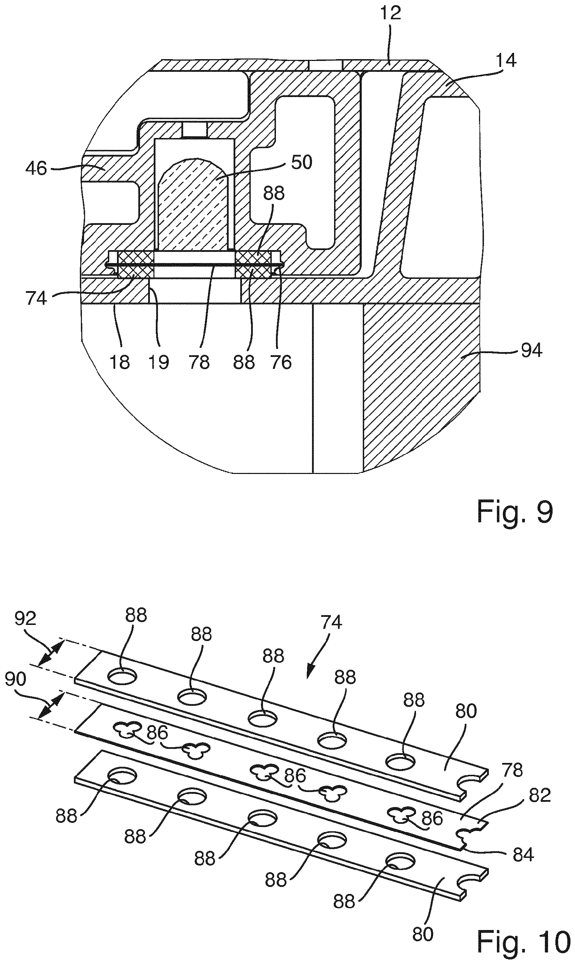

Alternativ zur Sicherung der Ventilkörper 50 im Funktionsteil 46 durch eine Folie, die bspw. mit dem Funktionsteil 46 verklebt ist, ist es denkbar, die Ventilkörper 50 mit einem streifenförmigen Befestigungselement 74 zu sichern, das zur Sicherung der Ventilkörper 50 im Funktionsteil 46 ausgelegt ist (vgl. Figuren 9 und 10). Dazu ist im Funktionsteil 46 eine Nut 76 vorgesehen, in welche das streifenförmige Befestigungselement 74 derart einclipsbar ist, dass der Ventilkörper 50 bei in die Nut 76 eingeclipstem Befestigungselement 74 gegen Herausfallen aus dem Funktionsteil 46 gesichert ist.

Eine derartige Anordnung ist in Figur 9 gezeigt. Dort sind das streifenförmige Befestigungselement 74, sowie die Nut 76 deutlich erkennbar.

Das streifenförmige Befestigungselement 74 ist in Figur 10 in einer Explosionsdarstellung gezeigt. Wie deutlich zu erkennen ist, ist das streifenförmige Befestigungselement 74 mehrlagig ausgebildet und umfasst eine flächige Maskenfolie 78 und zwei flächige Dichtungselemente 80, wobei die flächigen Dichtungselemente 80 auf einer Ober- und Unterseite 82, 84 der Maskenfolie 78 angeordnet sind und bspw. mit der Maskenfolie 78 verklebt sind. Die Maskenfolie 78 und die Dichtungselemente 80 weisen jeweils Öffnungen 86, 88 mit einer Anordnung auf, deren Anordnung der Anordnung bzw. dem Lochmuster der Saugöffnungen 19 des Ansaugteils 14 entspricht. Die Öffnungen 88 der Dichtungselemente sind dabei kreisrund, wobei die Öffnungen 86 der Maskenfolie 78 die Form eines vorzugsweise dreiblättrigen Kleeblattes aufweisen. Die Öffnungen 88 der Dichtungselemente 80 weisen einen Durchmesser auf, welcher größer ist als ein Außendurchmesser der Ventilkörper 50, so dass eine Sicherung der Ventilkörper 50 lediglich durch die kleeblattförmigen Öffnungen 86 der Maskenfolie 78 erfolgt.

Anstatt eines dreilagigen Aufbaus des streifenförmigen Befestigungselements 74 ist auch ein Aufbau mit mehr als drei Lagen, d.h. bspw. ein vier- oder fünflagiger Aufbau des streifenförmigen Befestigungselements 74 möglich.

Wie in Figur 9 deutlich zu erkennen ist, ist das streifenförmige Befestigungselement 74 lediglich mit der Maskenfolie 78 in die Nut 76 eingeclipst, d.h. lediglich die Maskenfolie 78 greift in die Nut 76 ein. Hierzu weist die Maskenfolie 78 in einer lateralen Richtung, d.h. einer Richtung quer zur Längserstreckung eine Breite 90 auf, die größer ist als eine Breite 92 der Dichtungselemente 80 (vgl. Figur 10). Bei der in Figur 9 gezeigten Ausführungsform ist auf der Saugseite 18 des Ansaugteils 14 ein flexibler Belag 94 in Form eines Schaums angeordnet.

Mit dem erfindungsgemäßen Flächensauggreifer 10 ist ein einfaches Entfernen des Ansaugteils 14 vom Greifergrundteil 12 ermöglicht, so dass das Funktionsteil 46 leicht austauschbar und leicht zu reinigen ist.

Insgesamt kann mit dem erfindungsgemäßen Flächensauggreifer 10 die Wartungsfreundlichkeit und die Anwendungsflexibilität erhöht werden.

## Patentansprüche

1. Flächensauggreifer (10) zum Ansaugen und Handhaben eines Gegenstands, mit einem Greifergrundteil (12), das eine mittels einer Unterdruckversorgung evakuierbare erste Unterdruckkammer (16) aufweist, und mit einem dem Gegenstand zugewandten Ansaugteil (14) mit einer Saugseite (18), das mit dem Greifergrundteil (12) verbindbar ist, wobei eine Schnellwechseleinrichtung vorgesehen ist, die zur Verbindung des Greifergrundteils (12) und des Ansaugteils (14) ausgelegt ist,
**dadurch gekennzeichnet, dass** die Schnellwechseleinrichtung derart ausgebildet ist, dass das Ansaugteil (14) zur Erreichung einer Vormontageposition einseitig mit dem Greifergrundteil (12) derart verbindbar ist, dass das Ansaugteil (14) zur fluiddichten Verbindung mit dem Greifergrundteil (12) in eine Endmontageposition klappbar ist, wobei die Schnellwechseleinrichtung eine Einhängvorrichtung umfasst, die derart ausgebildet ist, dass das Ansaugteil (14) in das Greifergrundteil (12) einseitig einhängbar ist.

2. Flächensauggreifer (10) nach Anspruch 1, **dadurch gekennzeichnet, dass** die Schnellwechseleinrichtung wenigstens eine Fixiereinrichtung (54, 62) umfasst, die auf der der Einhängvorrichtung abgewandten Seite des Flächensauggreifers (10) vorgesehen ist und derart ausgelegt ist, dass das Ansaugteil (14) am Greifergrundteil (12) in der Endmontageposition fixierbar ist.

3. Flächensauggreifer (10) nach Anspruch 2, **dadurch gekennzeichnet, dass** die Fixiereinrichtung wenigstens einen Spannverschluss (54) umfasst.

4. Flächensauggreifer (10) nach wenigstens einem der vorherigen Ansprüche, **dadurch gekennzeichnet, dass** ein Funktionsteil (46) vorgesehen ist, in dem wenigstens ein Strömungsventil (48) angeordnet ist.

5. Flächensauggreifer (10) nach Anspruch 4, **dadurch gekennzeichnet, dass** die Schnellwechseleinrichtung derart ausgelegt ist, dass das Funktionsteil (46) zur Erreichung einer Vormontageposition einseitig mit dem Greifergrundteil (12) derart verbindbar ist, dass das Funktionsteil (46) klappbar in eine Endmontageposition verlagerbar ist.

6. Flächensauggreifer (10) nach Anspruch 4, **dadurch gekennzeichnet, dass** das Funktionsteil (46) am Greifergrundteil (12) mittels einer Clipsverbindung, einer Magnetverbindung oder einer Nut-Feder-Verbindung befestigbar ist.

7. Flächensauggreifer (10) nach Anspruch 4, **dadurch gekennzeichnet, dass** wenigstens ein Deckel (44) vorgesehen ist, der das Greifergrundteil (12) an einer kurzen Schmalseite verschließt, wobei das Funktionsteil (46) am Greifergrundteil (12) mittelbar durch den Deckel (44) befestigbar ist.

8. Flächensauggreifer (10) nach wenigstens einem der Ansprüche 4 bis 6, **dadurch gekennzeichnet, dass** das Funktionsteil (46) zwischen dem Greifergrundteil (12) und dem Ansaugteil (14) anordenbar ist oder dass das Funktionsteil (12) und das Ansaugteil (14) einteilig ausgebildet sind.

9. Flächensauggreifer (10) nach wenigstens einem der Ansprüche 4 bis 7, **dadurch gekennzeichnet, dass** das wenigstens eine Strömungsventil (48) einen Ventilkörper (50) aufweist, wobei der Ventilkörper (50) von einer dem Greifergrundteil (12) zugewandten Seite und/oder von einer der Saugseite (18) zugewandten Seite gegen Herausfallen gesichert ist.

10. Flächensauggreifer (10) nach Anspruch 9, **dadurch gekennzeichnet, dass** eine Folie vorgesehen ist, die zur Sicherung des Ventilkörpers (50) im Funktionsteil (46) ausgelegt ist und/oder dass das Ansaugteil (14) zur Sicherung des Ventilkörpers (50) im Funktionsteil (46) auf der der Saugseite (18) zugewandten Seite ausgelegt ist.

11. Flächensauggreifer (10) nach Anspruch 9, **dadurch gekennzeichnet, dass** ein streifenförmiges Befestigungselement (74) vorgesehen ist, das zur Sicherung des Ventilkörpers (50) im Funktionsteil (46) ausgelegt ist, wobei eine Nut (76) vorgesehen ist, in welche das streifenförmige Befestigungselement (74) derart einclipsbar ist, dass der Ventilkörper (50) bei in die Nut (76) eingeclipstem Befestigungselement (74) gegen Herausfallen aus dem Funktionsteil (46) gesichert ist.

12. Flächensauggreifer (10) nach Anspruch 11, **dadurch gekennzeichnet, dass** das streifenförmige Befestigungselement (74) mehrlagig ausgebildet ist und eine flächige Maskenfolie (78) und zwei flächige Dichtungselemente (80) umfasst, wobei die flächigen Dichtungselemente (80) auf einer Ober- und Unterseite (82, 84) der Maskenfolie (78) angeordnet sind.

13. Flächensauggreifer (10) nach wenigstens einem der vorherigen Ansprüche, **dadurch gekennzeichnet, dass** das Greifergrundteil (12) an seinen langen Schmalseiten (34) jeweils wenigstens eine Nut (36) aufweist und/oder dass das Ansaugteil (14) an seinen langen Schmalseiten (38) jeweils wenigstens eine Nut (40) aufweist.

14. Flächensauggreifer (10) nach Anspruch 13, **dadurch gekennzeichnet, dass** die wenigstens eine Nut (36, 40) derart ausgebildet ist, dass ein Nutenstein in der Nut verliersicher anordenbar ist.

15. Flächensauggreifer (10) nach wenigstens einem der vorherigen Ansprüche, **dadurch gekennzeichnet, dass** ein flexibler Belag (94) vorgesehen ist, der am Ansaugteil (14) an seiner dem Gegenstand zugewandten Saugseite (18) angeordnet ist.

16. Flächensauggreifer (10) nach wenigstens einem der vorherigen Ansprüche, **dadurch gekennzeichnet, dass** das Ansaugteil (14) eine zweite Unterdruckkammer (26) aufweist, wobei ein in einem Steuerzylinder (28) geführter und zwischen einer Verschlusslage und einer Verbindungslage verfahrbarer Steuerkolben (30) vorgesehen ist, wobei der Steuerkolben (30) in der Verschlusslage die erste und die zweite Unterdruckkammer (16, 26) fluidisch trennt und in der Verbindungslage fluidisch verbindet.

## Claims

1. Surface suction gripper (10) for sucking and handling an object, with a gripper base part (12) having a first vacuum chamber (16) to be evacuated by means of a vacuum supply, and having a suction part (14) facing the object and comprising a suction side (18), which can be connected with the gripper base part (12), wherein a quick exchange device is provided which is adapted for connecting the gripper base part (12) and the suction part,
**characterized in that** the quick exchange device is configured such that the suction part (14) can be connected to the gripper base part (12) unilaterally for reaching a pre-mounting position in such a way that the suction part (14) can be folded into a final mounting position for a fluid-tight connection with the gripper base part (12), wherein the quick exchange device comprises a hook-up device which is configured in such a way that the suction part (14) can be hooked unilaterally onto the gripper base part (12).

2. Surface suction gripper (10) as claimed in claim 1, **characterized in that** the quick exchange device comprises at least one fixing device (54, 62) which is provided on the side of the surface suction gripper (10) facing away from the hook-up device and which is configured in such a way that the suction part (14) can be fixed on the gripper base part (12) in the final mounting position.

3. Surface suction gripper (10) as claimed in claim 2, **characterized in that** the fixing device comprises at least one toggle latch (54).

4. Surface suction gripper (10) as claimed in at least one of the previous claims, **characterized in that** a functional part (46) is provided in which at least one flow valve (48) is arranged.

5. Surface suction gripper (10) as claimed in claim 4, **characterized in that** the quick exchange device is configured in such a way that the functional part (46) can be connected unilaterally with the gripper base part (12) for reaching a pre-mounting position in such a way that the functional part (46) can be foldably displaced into a final mounting position.

6. Surface suction gripper (10) as claimed in claim 4, **characterized in that** the functional part (46) can be attached to the gripper base part (12) by means of a clip connection, a magnetic connection or a tongue and groove connection.

7. Surface suction gripper (10) as claimed in claim 4, **characterized in that** at least one lid (44) is provided which closes the gripper base part (12) on a short narrow side, wherein the functional part (46) can be attached to the gripper base part (12) indirectly by means of the lid (44).

8. Surface suction gripper (10) as claimed in at least one of the claims 4 to 6, **characterized in that** the functional part (46) can be arranged between the gripper base part (12) and the suction part (14) or that the functional part (12) and the suction part (14) are formed in one piece.

9. Surface suction gripper (10) as claimed in at least one of the claims 4 to 7, **characterized in that** the at least one flow valve (48) has a valve body (50), wherein the valve body (50) is secured against falling out from a side facing the gripper base part (12) and/or from a side facing the suction side (18) .

10. Surface suction gripper (10) as claimed in claim 9, **characterized in that** a film is provided which is adapted for securing the valve body (50) in the functional part (46) and/or that the suction part (14) is adapted for securing the valve body (50) in the functional part (46) on the side facing the suction side (18).

11. Surface suction gripper (10) as claimed in claim 9, **characterized in that** a strip-shaped fastening element (74) is provided which is adapted for securing the valve body (50) in the functional part (46), wherein a groove (76) is provided into which the strip-shaped fastening element (74) can be clipped in such a way that the valve body (50) is secured against falling out of the functional part (46) when the fastening element (74) is clipped into the groove (76).

12. Surface suction gripper (10) as claimed in claim 11, **characterized in that** the strip-shaped fastening element (74) is configured with multiple layers and comprises a planar mask film (78) and two planar sealing elements (80), wherein the planar sealing elements (80) are arranged on the top and bottom surface (82, 84) of the mask film (78).

13. Surface suction gripper (10) as claimed in at least one of the previous claims, **characterized in that** the gripper base part (12) has at least one groove (36) at each of its long narrow sides (34) and/or that the suction part (14) has at least one groove (40) at each of its long narrow sides (38).

14. Surface suction gripper (10) as claimed in claim 13, **characterized in that** the at least one groove (36, 40) is configured in such a way that a sliding block can be arranged in the groove secured against loss.

15. Surface suction gripper (10) as claimed in at least one of the previous claims, **characterized in that** a flexible covering (94) is provided which is arranged on the suction part (14) on its suction side (18) facing the object.

16. Surface suction gripper (10) as claimed in at least one of the previous claims, **characterized in that** the suction part (14) comprises a second vacuum chamber (26), wherein a control piston (30) guided in a control cylinder (28) and movable between a closing position and a connecting position is provided, wherein the control piston (30) fluidically separates in the closing position the first and the second vacuum chamber (16, 26) and fluidically connects them in the connecting position.

## Revendications

1. Ventouse de préhension plane (10) pour attirer par aspiration et manipuler un objet, avec une partie de base de ventouse (12), qui présente une première chambre à vide (16) dans laquelle le vide peut être créé au moyen d'une alimentation en vide, et avec une partie d'aspiration (14) tournée vers l'objet avec un côté d'aspiration (18), qui peut être relié à la partie de base de ventouse (12), dans laquelle un dispositif de changement rapide est prévu, qui est conçu pour relier la partie de base de ventouse (12) et la partie d'aspiration (14),
**caractérisée en ce que** le dispositif de changement rapide est réalisé de telle sorte que la partie d'aspiration (14), pour atteindre une position de prémontage, peut être reliée d'un côté à la partie de base de ventouse (12), de telle sorte que la partie d'aspiration (14), pour la liaison étanche au fluide à la partie de base de ventouse (12), peut être rabattue dans une position de montage finale,
dans laquelle le dispositif de changement rapide comprend un dispositif d'accrochage, qui est réalisé de telle sorte que la partie d'aspiration (14) peut être accrochée d'un côté dans la partie de base de ventouse (12).

2. Ventouse de préhension plane (10) selon la revendication 1, **caractérisée en ce que** le dispositif de changement rapide comprend au moins un dispositif de fixation (54, 62), qui est prévu sur le côté de la ventouse de préhension plane (10) opposé au dispositif d'accrochage et est conçu de telle sorte que la partie d'aspiration (14) peut être fixée sur la partie de base de ventouse (12) dans la position de montage finale.

3. Ventouse de préhension plane (10) selon la revendication 2, **caractérisée en ce que** le dispositif de fixation comprend au moins une fermeture de serrage (54).

4. Ventouse de préhension plane (10) selon au moins l'une des revendications précédentes, **caractérisée en ce qu'**une partie fonctionnelle (46) est prévue, dans laquelle au moins une soupape à écoulement (48) est disposée.

5. Ventouse de préhension plane (10) selon la revendication 4, **caractérisée en ce que** le dispositif de changement rapide est conçu de telle sorte que la partie fonctionnelle (46), pour atteindre une position de prémontage, peut être reliée d'un côté à la partie de base de ventouse (12), de telle sorte que la partie fonctionnelle (46) est déplaçable de manière rabattable dans une position de montage finale.

6. Ventouse de préhension plane (10) selon la revendication 4, **caractérisée en ce que** la partie fonctionnelle (46) peut être fixée sur la partie de base de ventouse (12) au moyen d'une liaison clipsée, d'une liaison magnétique ou d'une liaison à rainure et languette.

7. Ventouse de préhension plane (10) selon la revendication 4, **caractérisée en ce qu'**au moins un couvercle (44) est prévu, qui ferme la partie de base de ventouse (12) sur un côté étroit court, dans laquelle la partie fonctionnelle (46) peut être fixée sur la partie de base de ventouse (12) de manière indirecte par le couvercle (44).

8. Ventouse de préhension plane (10) selon au moins l'une des revendications 4 à 6, **caractérisée en ce que** la partie fonctionnelle (46) peut être disposée entre la partie de base de ventouse (12) et la partie d'aspiration (14) ou que la partie fonctionnelle (12) et la partie d'aspiration (14) sont réalisées d'une seule pièce.

9. Ventouse de préhension plane (10) selon au moins l'une des revendications 4 à 7, **caractérisée en ce que** l'au moins une soupape à écoulement (48) présente un corps de soupape (50), dans laquelle le corps de soupape (50) est empêché de tomber par un côté tourné vers la partie de base de ventouse (12) et/ou par un côté tourné vers le côté d'aspiration (18).

10. Ventouse de préhension plane (10) selon la revendication 9, **caractérisée en ce qu'**une feuille est prévue, qui est conçue pour bloquer le corps de soupape (50) dans la partie fonctionnelle (46) et/ou que la partie d'aspiration (14) est conçue pour bloquer le corps de soupape (50) dans la partie fonctionnelle (46) sur le côté tourné vers le côté d'aspiration (18).

11. Ventouse de préhension plane (10) selon la revendication 9, **caractérisée en ce qu'**un élément de fixation (74) en forme de bande est prévu, qui est conçu pour bloquer le corps de soupape (50) dans la partie fonctionnelle (46), dans laquelle une rainure (76) est prévue, dans laquelle l'élément de fixation (74) en forme de bande peut être clipsé de telle sorte que le corps de soupape (50) est empêché de tomber de la partie fonctionnelle (46) lorsque l'élément de fixation (74) est clipsé dans la rainure (76).

12. Ventouse de préhension plane (10) selon la revendication 11, **caractérisée en ce que** l'élément de fixation (74) en forme de bande est réalisé en plusieurs couches et comprend une feuille formant masque (78) plane et deux éléments d'étanchéité (80) plans, dans laquelle les éléments d'étanchéité (80) plans sont disposés sur un côté supérieur et inférieur (82, 84) de la feuille formant masque (78).

13. Ventouse de préhension plane (10) selon au moins l'une des revendications précédentes, **caractérisée en ce que** la partie de base de ventouse (12) présente sur ses côtés étroits (34) longs respectivement au moins une rainure (36) et/ou que la partie d'aspiration (14) présente sur ses côtés étroits (38) longs respectivement au moins une rainure (40).

14. Ventouse de préhension plane (10) selon la revendication 13, **caractérisée en ce que** l'au moins une rainure (36, 40) est réalisée de telle sorte qu'un écrou pour rainure peut être disposé de manière imperdable dans la rainure.

15. Ventouse de préhension plane (10) selon au moins l'une des revendications précédentes, **caractérisée en ce qu'**un revêtement flexible (94) est prévu, qui est disposé sur la partie d'aspiration (14) sur son côté d'aspiration (18) tourné vers l'objet.

16. Ventouse de préhension plane (10) selon au moins l'une des revendications précédentes, **caractérisée en ce que** la partie d'aspiration (14) présente une deuxième chambre à vide (26), dans laquelle un piston de commande (30) guidé dans un cylindre de commande (28) et déplaçable entre une position de fermeture et une position de liaison est prévu, dans laquelle le piston de commande (30) sépare fluidiquement la première et la deuxième chambre à vide (16, 26) dans la position de fermeture et les relie fluidiquement dans la position de liaison.
